# EUROPEAN PATENT SPECIFICATION

(11) **EP 2 474 858 B1**
(45) Date of publication and mention of the grant of the patent: **20.04.2016**
(21) Application number: 10811620.3
(22) Date of filing: 12.07.2010
(51) Int. Cl.: G02F 1/1343, G02F 1/1337

(54) **LIQUID CRYSTAL DISPLAY ELEMENT**
FLÜSSIGKRISTALLANZEIGEELEMENT
ELÉMENT D'AFFICHAGE À CRISTAUX LIQUIDES

(30) Priority: 31.08.2009 JP 2009199686
(43) Date of publication of application: 11.07.2012
(73) Proprietor: Nippon Seiki Co., Ltd., Niigata 940-8580 (JP)
(72) Inventor: KOBAYASHI, Kazuya, Nagaoka, Niigata (JP)
(74) Representative: Jackson, Richard Eric
(86) International application number: PCT/JP2010/061743
(87) International publication number: WO 2011/024569

(56) References cited:
- WO-A1-2006/049048
- WO-A1-2008/146512
- JP-A- 6 194 656
- JP-A- 2007 256 300
- JP-A- 2007 256 300
- JP-A- 2009 186 870
- US-A1- 2006 209 008

## Description

### Technical Field

The present invention relates to a liquid crystal display element.

### Background Art

For example, Patent literature 1 discloses a vertically aligned liquid crystal display element wherein a liquid crystal layer is sandwiched by a pair of substrates on which transparent electrodes with predetermined patterns for display are formed, and which are subjected to vertical alignment processing, characterized in that a slit is formed on each of the transparent electrodes on the pair of substrates by removing a substantially rectangular portion from the transparent electrode in a display area formed by the transparent electrodes on the pair of substrates, and the slits provided on one and the other transparent electrodes are alternately arranged in the display area in the direction orthogonal to the longitudinal direction of the slits.

### Citation List

Patent literature 2 discloses a liquid crystal display device which has slits formed in a pair of opposing transparent electrodes, wherein the slits are arranged alternately along the opposing electrodes. The first slit portions are longitudinal in a direction inclined to an X axis, and the second slit portions are longitudinal in a direction inclined to the X axis in the opposite direction from the first slit portions. The first slit portion of one transparent electrode and the first slit portion of the other transparent electrode are arranged alternately along the Y axis, and the second slit portion of the one transparent electrode and the second slit portion of the other transparent electrode are arranged alternately along the Y axis. Cross slits may be arranged on one transparent electrode and the other transparent electrode while shifted by a half pitch along the X axis and Y axis.

### Patent literature

Patent literature 1: JP-A-2004-252298
Patent literature 2: JP-A-2007-256300

### Summary of Invention

### Technical Problem

However, when voltage is applied to such a liquid crystal display element to display a display pattern, in a display area near an end portion of a slit, the contour portion of the display pattern sometimes becomes uneven. The present inventor found that such a phenomenon occurs because the slit has a substantially rectangular shape, which will be described in detail later.

The present invention was made in view of the above circumstances, and it is an object of the present invention to provide a liquid crystal display element capable of reducing the unevenness of the contour portion of a display pattern (namely, the contour portion of the display pattern becomes less likely to appear to be uneven) or preventing the contour portion of a display pattern from becoming uneven (namely, the contour portion of the display pattern does not appear to be uneven).

### Solution to Problem

A liquid crystal display element according to the present invention as defined in claim 1 hereinafter.

A liquid crystal display element according to the present invention comprises a liquid crystal layer, a first electrode and a second electrode, the first electrode and the second electrode facing each other with the liquid crystal layer sandwiched therebetween in the thickness direction of the liquid crystal layer, wherein
the first electrode is provided with a first slit penetrating in the thickness direction,
the second electrode is provided with a second slit penetrating in the thickness direction,
the first slit and the second slit are formed so as to be displaced from each other when viewed in the thickness direction, so that when voltage is applied to the first electrode and the second electrode, an electric field that has an inclination with respect to the thickness direction is generated, and
the contour of one end portion of the first slit has at most one corner with an angle of 90 degrees or less.

### Advantageous Effect of Invention

A liquid crystal display element according to the present invention is capable of reducing or preventing the unevenness of the contour portion of a display pattern.

### Brief Description of Drawings

[Figure 1] Figure 1 is a schematic cross-sectional view of a liquid crystal display element according to one embodiment of the present invention (a) before voltage application, and (b) under voltage application.
[Figure 2] Figure 2 (a) is a plan view of an upper electrode included in a liquid crystal display element according to one embodiment of the present invention, (b) is a plan view of a lower electrode included in the liquid crystal display element according to one embodiment of the present invention, and (c) is a plan view showing a segment included in the liquid crystal display element according to one embodiment of the present invention.
[Figure 3] Figure 3 is a diagram showing a display area of the liquid crystal display element according to one embodiment of the present invention.
[Figure 4] Figure 4 is a diagram showing the absorption axis of each of two polarizing plates included in the liquid crystal display element according to one embodiment of the present invention, and the direction in which a liquid crystal molecule tips.
[Figure 5] Figure 5 is a plan view showing a segment included in the liquid crystal display element according to another embodiment of the present invention.
[Figure 6] Figure 6 is a diagram showing a microscope photograph of a lighted segment (a) when a slit is a rectangle, (b) when the slit in the liquid crystal display element has a shape according to one embodiment of the present invention, and (c) when the slit in the liquid crystal display element has a shape according to another embodiment of the present invention.
[Figure 7] Figure 7 is a tabular view showing the relationship between ON brightness and alignment stability when the width of a slit is changed in the liquid crystal display element according to one embodiment of the present invention.
[Figure 8] Figure 8 is a graph showing the relationship between the width of a slit and ON brightness in the liquid crystal display element according to one embodiment of the present invention.
[Figure 9] Figure 9 is a tabular view showing the relationship between ON brightness and alignment stability when a pitch is changed in the liquid crystal display element according to one embodiment of the present invention.
[Figure 10] Figure 10 is a graph showing the relationship between a pitch and ON brightness in the liquid crystal display element according to one embodiment of the present invention.
[Figure 11] Figure 11 is a graph showing a microscope photograph of some areas of a plurality of segments when the plurality of segments are lighted which are included in the liquid crystal display element according to one embodiment of the present invention (a) when the pitch of slits is 50µm, (b) when the pitch of slits is 75µm, (c) when the pitch of slits is 100µm, (d) when the pitch of slits is 125µm, (e) when the pitch of slits is 150µm, and (f) when the pitch of slits is 200µm.

### Description of Embodiment

One embodiment of the present invention will be described with reference to the drawings. Note that the present invention is not limited by the following embodiment and the drawings. Needless to say, any change (including the deletion or addition of components) may be made to the following embodiment (including aspects shown in the drawings). Note that although the following describes a case where the present invention is achieved using a vertically aligned liquid crystal display element, the present invention may be achieved using other liquid crystal display elements.

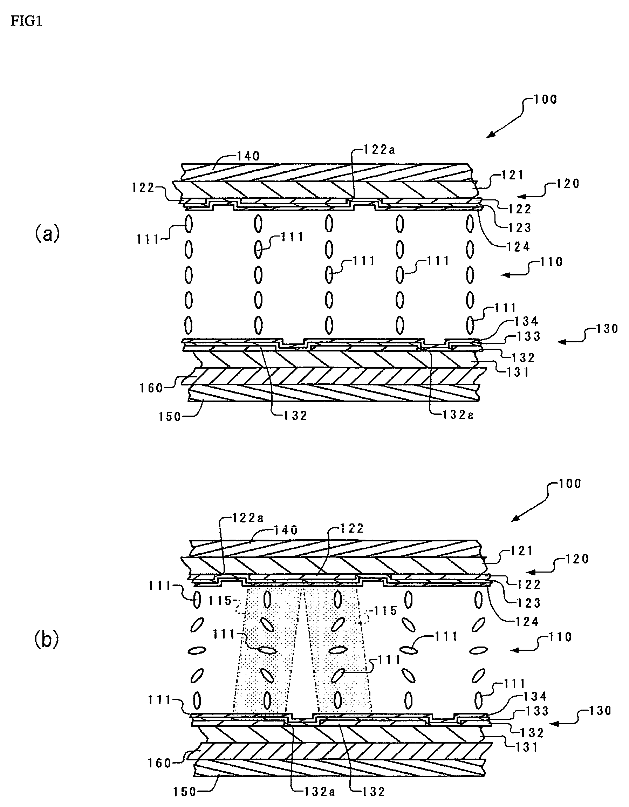

As shown in Figure 1, a liquid crystal display element 100 according to the present embodiment includes a liquid crystal layer 110, an upper substrate 120, a lower substrate 130, an upper polarizing plate 140, a lower polarizing plate 150 and a viewing angle compensating plate 160.

The liquid crystal layer 110 is constituted by liquid crystals including liquid crystal molecules 111 sandwiched by the upper substrate 120 described later and the lower substrate 130 described later. The upper substrate 120 and the lower substrate 130 sandwich a sealing member, not shown, to be superimposed so as to face each other while keeping a predetermined distance, and the two are immobilized by the sealing member, not shown. An enclosed space is formed by the upper substrate 120, the lower substrate 130 and the sealing member, and liquid crystals are enclosed in the formed enclosed space. Enclosure of liquid crystals can be performed by well-known methods. The liquid crystals enclosed in the enclosed space constitute a liquid crystal layer 110. For example, the liquid crystal is constituted by a liquid crystal material whose dielectric anisotropy is negative.

The upper substrate 120 includes a base material 121, an upper electrode 122, an insulating film 123 and an alignment film 124. The upper electrode 122 having a predetermined shape is formed on the principal plane of the base material 121. The insulating film 123 is formed on the principal plane of the base material 121 so as to cover the upper electrode 122. The alignment film 124 is formed on the insulating film 123 so as to cover the insulating film 123. The upper electrode 122 is formed by a well-known method (e.g., sputtering, vapor deposition or etching). The insulating film 123 and the alignment film 124 are each formed by a well-known method (e.g. , flexo printing).

The base material 121 is a transparent substrate (e.g. , a transparent glass substrate), and allows light to pass through.

The upper electrode 122 is a transparent electrode (e.g. , formed of an ITO (indium tin oxide) ) that allows light to pass through. The detail of the upper electrode 122 will be described later.

The insulating film 123 is a film (e.g., formed of a silicon dioxide) for insulating and protecting the upper electrode 122, and formed on the base material 121 so as to cover the upper electrode 122.

The alignment film 124 is a film (e.g., formed of a polyimide) being in contact with the liquid crystal layer 110. The alignment film 124 is a so-called vertical alignment film that causes a liquid crystal molecule 111 included in the liquid crystal layer 110 to stand in such a way that the longitudinal direction of the liquid crystal molecule 111 is aligned along the thickness direction (normal direction with respect to the surface of the upper substrate 120) of the liquid crystal layer 110 in the initial state (see Figure 1 (a)). The initial state refers to the state in which voltage is not applied to the upper electrode 122 and the lower electrode 132. In addition, when voltage is applied to the upper electrode 122 and the lower electrode 132, the liquid crystal molecule 111 tips in the direction perpendicular to the longitudinal direction of a slit 122a when viewed in the thickness direction of the liquid crystal layer 110.

Since the lower substrate 130 has almost the same configuration as that of the upper substrate 120, the detailed description thereof will be omitted. Here, a base material 131 corresponds to the base material 121. A lower electrode 132 corresponds to the upper electrode 122. An insulating film 133 corresponds to the insulating film 123. An alignment film 134 corresponds to the alignment film 124.

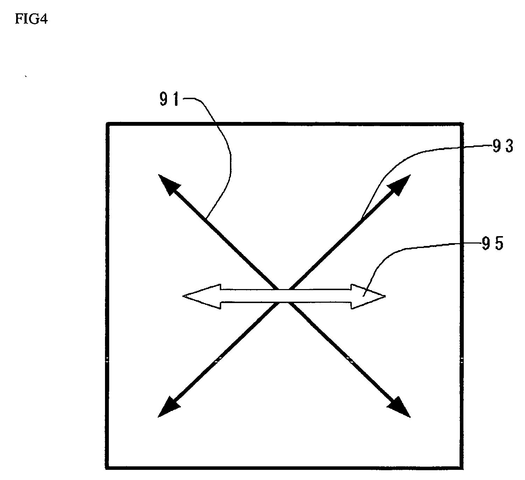

An upper polarizing plate 140 (e.g., constituted by a layered product in which a polyvinyl alcohol (PVA) film is sandwiched by triacetylcellulose (TAC) films) is placed outside the upper substrate 120, and a lower polarizing plate 150 (e.g., constituted by a layered product in which the polyvinyl alcohol film is sandwiched by triacetylcellulose films) is placed outside the lower substrate 130. The upper polarizing plate 140 and the lower polarizing plate 150 absorb predetermined light. The upper polarizing plate 140 and the lower polarizing plate 150 are placed so that an absorption axis 91 of the upper polarizing plate 140 and an absorption axis 93 of the lower polarizing plate 150 are orthogonal to each other (see Figure 4), and the absorption axis 91 and the absorption axis 93 are aligned along the direction of 45 degrees with respect to the direction 95 in which the liquid crystal molecule 111 tips (see Figure 4).

In the viewing angle compensating plate 160, the optical axis is aligned in the thickness direction of the liquid crystal layer 110, and the birefringence is formed by a negative uniaxial retardation film. Note that, in this embodiment, the viewing angle compensating plate 160 is placed between the lower substrate 130 and the lower polarizing plate 150; additionally or alternatively, the viewing angle compensating plate 160 may be placed between the upper substrate 120 and the upper polarizing plate 140.

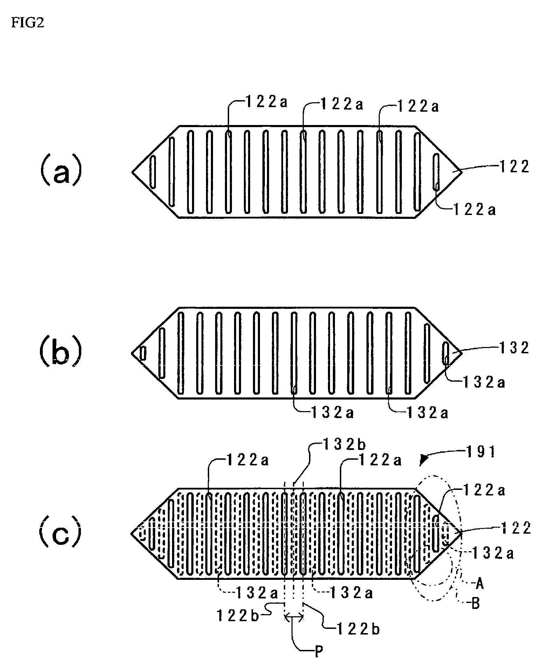

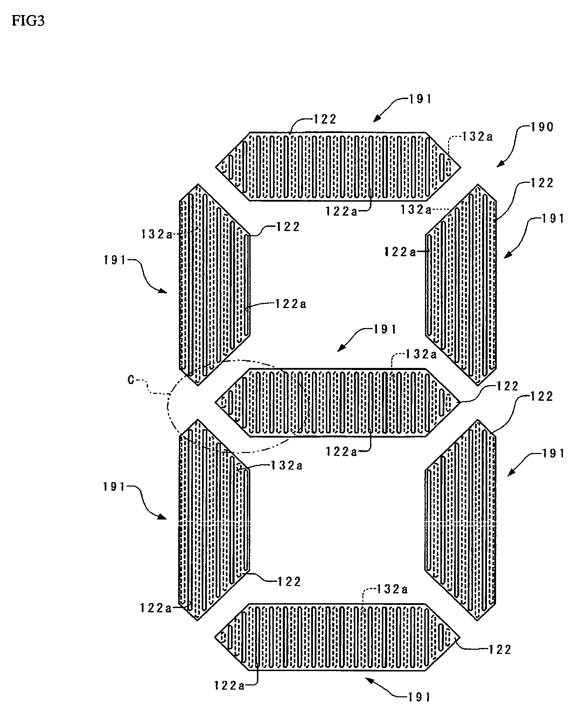

As shown in Figures 2 and 3, a plurality of upper electrodes 122 and lower electrodes 132 are formed in desired shapes. It may suffice to form at least one upper electrode 122 and at least one lower electrode 132, respectively. Each upper electrode 122 and each lower electrode 132 which face each other have substantially the same plane shape (shape when viewed in the thickness direction of the liquid crystal layer 110). The area on the display surface of the liquid crystal display element 100 corresponding to a plurality of upper electrodes 122 and a plurality of lower electrodes 132 becomes the whole of the display area where the liquid crystal display element 100 displays display patterns. That is to say, the entire display area 190 is formed by a plurality of upper electrodes 122 and a plurality of lower electrodes 132, and, in a display surface of the liquid crystal display element 100, the area corresponding to the entire display area 190 becomes the whole of the display area.

In the present embodiment, the liquid crystal display element 100 performs so called segmental display of display patterns. That is to say, the entire display area 190 where display patterns are displayed is divided into a plurality of display areas (segments 191). The entire display area 190 is constituted by a plurality of segments 191. One segment 191 is constituted by one upper electrode 122 and one lower electrode 132. By causing light, which passed through one or more segments 191 selected from a plurality of segments 191, to be emitted through the upper polarizing plate 140 or the like (that is, by lighting the segment 191), the liquid crystal display element 100 can display several types of display patterns (e.g., numeric characters "0" ... "9") using one entire display area 190. In order to light the segment 191, voltage is applied to a desired segment 191.

The upper electrode 122 has a slit 122a. The slit 122a is a through-hole penetrating through the upper electrode 122 in the thickness direction of the liquid crystal layer 110. The lower electrode 132 has a slit 132a. The slit 132a is a through-hole penetrating through the lower electrode 132 in the thickness direction of the liquid crystal layer 110. The slit 122a and the slit 132a are long in the first direction. Note that these slits 122a and 132a can be formed in desired shapes by specifying the shape of the upper electrode 122 and the lower electrode 132 when the upper electrode 122 and the lower electrode 132 are formed.

The slit 122a and the slit 132a are formed so as to be displaced from each other in the substantially perpendicular direction (the second direction) to the first direction (longitudinal direction of the slit 122a and the slit 132a) when viewed in the thickness direction of the liquid crystal layer 110. Particularly, the slit 122a and the slit 132a are formed so as to be displaced from each other at even intervals. For example, the central axis 122b of the slit 122a and the central axis 132b of the slit 132a in the width direction (the second direction) of the slit 122a and the slit 132a are displaced by half of the pitch P of the slits 122a (pitch of central axes 122b) that are next to each other when viewed in the thickness direction of the liquid crystal layer 110. The distance of the pitch P is equal to the pitch of the slits 122a that are next to each other (see Figure 2 (c)).

When voltage is applied to the upper electrode 122 and the lower electrode 132 which are thus formed, an oblique electric field 115 is generated between both electrodes (see Figure 1 (b)). At this time, as shown in Figure 1 (b), the liquid crystal molecule 111 tips in a given direction depending on the position thereof . The liquid crystal molecule 111 among the liquid crystal molecules 111, located in the center in the thickness direction of the liquid crystal layer 110 tips so that the longitudinal direction of the liquid crystal molecule 111 becomes perpendicular to the direction of the oblique electric field 115. In addition, among liquid crystal molecules 111, a liquid crystal molecule that is at a position close to the center in the thickness direction of the liquid crystal layer 110 is more likely to tip in such a way that the longitudinal direction of the liquid crystal molecule 111 becomes perpendicular to the direction of the oblique electric field 115, and the liquid crystal molecules 111 near the upper electrode 122 and the lower electrode 132 do not tip substantially (including not tipping at all).

In the liquid crystal display element 100 that is constituted as described above, the liquid crystal molecule 111 near the slit 122a and the liquid crystal molecule 111 near the slit 132a tip in different directions from each other (two directions) when viewed in the thickness direction of the liquid crystal layer 110 under voltage application. Therefore, such the liquid crystal display element 100 has a 2-domain structure so that respective visual properties are supplemented.

Here, a conventional slit has a substantially rectangular shape as described above. Therefore, each contour of both end portions in the first direction of the slit 122a and the slit 132a has two corners with an angle of 90 degrees or less. With such a slit shape, when the liquid crystal display element displays a display pattern, a contour portion of the display pattern sometimes becomes uneven.

Thus, as a result of various considerations, the present inventor predicted that alignment defects occurring in the end portions of the slit 122a and the slit 132a in the longitudinal direction intensively occur at the corners with an angle of 90 degrees or less, and since there are two portions where the alignment defects intensively occur, the contour portion of a display pattern sometimes becomes uneven.

In addition, the present inventor found that if the contour of the end portion in the first direction of the slit 122a or the slit 132a has at most one corner with an angle of 90 degrees or less, the unevenness of the contour portion of a display pattern can be reduced or prevented at least in a portion near the end portion of the slit.

Each contour of both end portions in the first direction of the slit 122a and the slit 132a in the liquid crystal display element 100 according to the present embodiment is a substantially semicircular arc. Note that, as shown in Figures 2 and 3, both ends of the slit 122a and the slit 132a are closed. Note that a substantial semicircle includes a semi perfect circle and a semi ellipse (here, a substantial semi perfect circle).

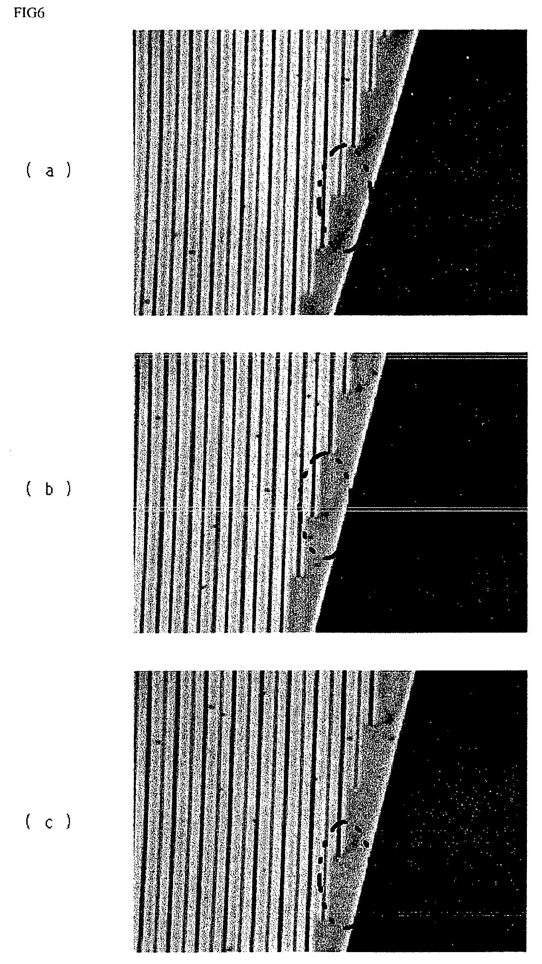

The contour of each end portion of the slit 122a and the slit 132a is formed into a substantially semicircular arc as shown in Figures 2 and 3, thus the contour of each end portion of the slit 122a and the slit 132a has no corner with an angle of 90 degrees or less. Therefore, it is predicted that a portion with an angle of 90 degrees where the alignment defects intensively occur is eliminated, thus, reducing or preventing the unevenness of the contour portion of a display pattern (see also the following Figure 6 (b)).

As described above, the liquid crystal display element 100 according to the present embodiment includes the liquid crystal layer 110, the first electrode (upper electrode 122 or lower electrode 132, idem hereinafter) and the second electrode (lower electrode 132 or upper electrode 122, idem hereinafter), the first electrode and the second electrode facing each other with the liquid crystal layer 110 sandwiched therebetween in the thickness direction of the liquid crystal layer 110. In addition, in the present embodiment, the first electrode is provided with a first slit (slit 122a or slit 132a, idem hereinafter) penetrating in the thickness direction of the liquid crystal layer 110, and the second electrode is provided with a second slit (slit 132a or slit 122a, idem hereinafter) penetrating in the thickness direction of the liquid crystal layer 110. Further, in the present embodiment, the first slit and the second slit are formed so as to be displaced from each other when viewed in the thickness direction of the liquid crystal layer 110, so that when voltage is applied to the first electrode and the second electrode, an electric field (oblique electric field 115) that has an inclination with respect to the thickness direction is generated. Moreover, in the present embodiment, the contour of one end portion of the first slit has at most one corner with an angle of 90 degrees or less. With such a configuration, the liquid crystal display element 100 according to the present embodiment can reduce or prevent the unevenness of the contour portion of the display pattern, as described above.

The contour of one end portion of either of the slit 122a and slit 132a may be formed into the aforementioned shape. In addition, the contour of the end portion of at least some of a plurality of slits 122a and/or at least some of a plurality of slits 132a may be formed into the aforementioned shape. Further, the contour of at least one of both end portions of the slit 122a and/or slit 132a may be formed into the aforementioned shape. In regard to the plane shape of the slit 122a and/or slit 132a, when one end is closed, the other end may be opened. Even in such a case, the unevenness of the contour portion of the display pattern can be reduced or prevented at least in the portion near the end portion of the slit having the aforementioned contour shape.

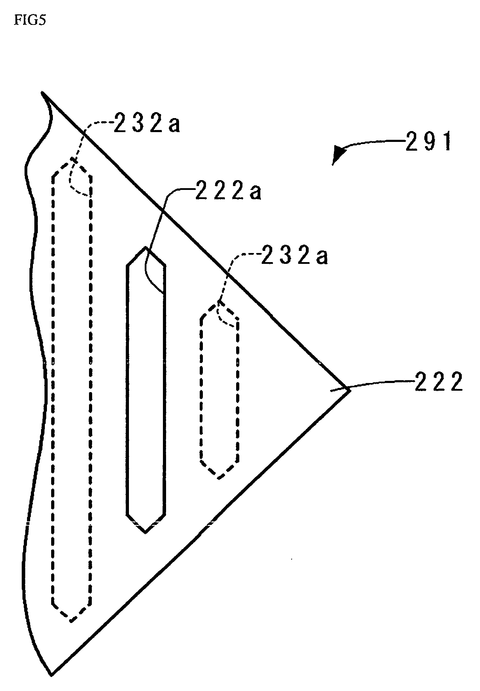

For example, the slit 122a or the slit 132a may be changed to a slit 222a or a slit 232a so that the contour of the end portion of the slit has at most one corner with an angle of 90 degrees or less (see Figure 5). In Figure 5, an upper electrode 222 corresponds to the upper electrode 122, and a segment 291 corresponds to the segment 191. The slit 222a and the slit 232a are hexagons. Thus, each contour of both end portions of the slit 222a and the slit 232a has three or more corners, and among three or more corners, there is at most one corner with an angle of 90 degrees or less. Even in such a case, the unevenness of the contour portion of the display pattern can be reduced or prevented. Since other descriptions such as configuration and influences of the liquid crystal display element when the slit 222a or the slit 232a is adopted is nearly the same as those for the slit 122a and the slit 132a, the descriptions thereof will be omitted. The slit 222a and the slit 232a may be polygons such as a heptagon or an octagon.

Figure 6 shows a microscope photograph of some of the segments 191 (e.g., the portion surrounded by a chain double-dashed line in Figure 2) having slits formed as described above. Figure 6 is a diagram showing a microscope photograph of a lighted segment 191 (a) when a slit is a rectangle, (b) when the slit 122a and the slit 132a are adopted, and (c) when the slit 222a and the slit 232a are adopted.

When the slit is a rectangle as shown in Figure 6 (a), the contour portion of the display pattern (area surrounded by the chain double-dashed line and the like) is displayed unevenly.

When Figures 6 (a) to (c) are compared, the contour portion of the display pattern (area surrounded by the chain double-dashed line and the like) is displayed most clearly when the shape of the slit 122a and the slit 132a is adopted (Figure 6 (b)). That is to say, when the slit 122a and the slit 132a are adopted (Figure 6 (b)), the uneven display of the contour portion of the display pattern can be reduced the most. This is expected to be due to the contour of each end portion of the slit 122a and the slit 132a has no corner with an angle of 90 degrees or less.

In addition, although not to the extent of Figure 6 (b), the contour portion of the display pattern (area surrounded by the chain double-dashed line or the like) is displayed more clearly when the slit 222a and the slit 232a are adopted (Figure 6 (c)) compared with when the slits are rectangles (Figure 6(a)). That is to say, when the slit 222a and the slit 232a are adopted (Figure 6 (c)), the uneven display of the contour portion of the display pattern can be reduced. This is expected to be due to the contour of each end portion of the slit 122a and the slit 132a has one corner with an angle of 90 degrees or less.

In the light of the above results, it is found that by forming the contour of the end portion of the slit into a shape having at most one corner with an angle of 90 degrees or less, the uneven display of the contour portion of the display pattern can be reduced. Even when the contour is a substantially semicircular arc, or has three or more corners and among three or more corners, there is at most one corner with an angle of 90 degrees or less, the uneven display of the contour portion of the display pattern is reduced, but when the contour is a substantially semicircular arc, the uneven display of the contour portion of the display pattern can be reduced more effectively compared with when the contour has three or more corners.

Note that, the contour portion of the display pattern that is unevenly displayed corresponds in particular to the portion where the contour portion of the display pattern is inclined with respect to the longitudinal direction of the slit as shown in Figure 6. Therefore, as shown in Figure 6 (or the area B surrounded by the chain double-dashed line of Figure 2 (c)), the lengths of the slit 122a (or 132a) and the slit 132a (or 122a) (alternatively, the slit 222a and slit 232a are also possible, idem hereinafter) are different in the first direction; the present embodiment is effective when the contour (contour surrounded by the chain double-dashed line and the like) of the display area (segment 191) on the end portion side (near the end portion) of the slit 122a (or 132a) and the slit 132a (or 122a) is inclined toward the first direction when viewed in a thickness direction of the liquid crystal layer 110; thus the uneven display of the contour portion of the display pattern can be reduced effectively. The lengths in the first direction of the first slit 122a (or 132a) and the second slit 132a (or 122a) differ according to the contour.

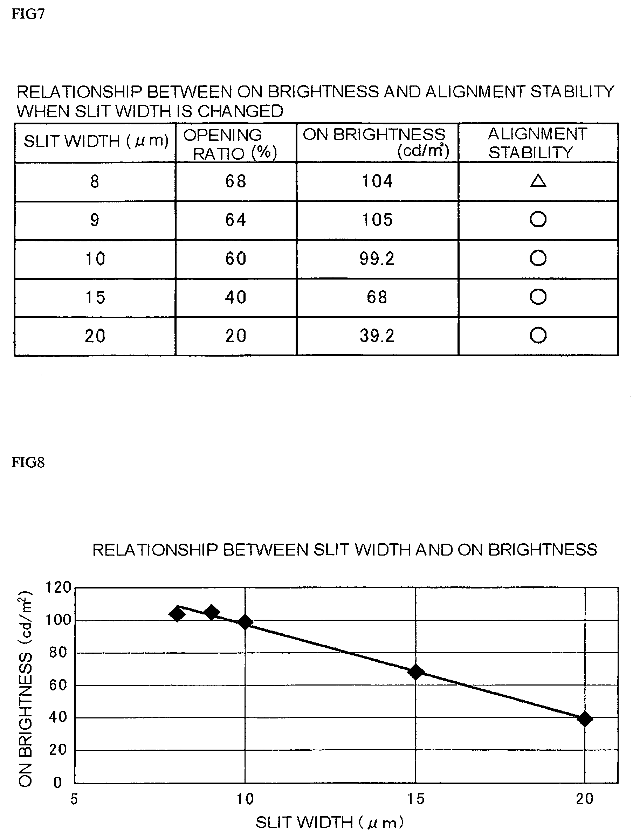

Note that the present inventor fixes the pitch (the pitch P and the like) of the slit 122a and the slit 132a (alternatively, the slit 222a and slit 232a are also possible, idem hereinafter) to 50µm, fixes the thickness of the liquid crystal layer 110 to 4µm, and changes the width (which refers to the length in the second direction) of the slit 122a and slit 132a to measure the brightness when one segment 191 is lighted (ON brightness) under voltage application, and confirm the unevenness of the brightness (alignment stability) by the visual inspection. This result is shown in Figures 7 and 8. Note that the opening ratio in Figure 7 refers to the proportion of the portion other than the slit in the segment 191 with respect to the whole segment 191. Further, the alignment stability, when suitable, is indicated by a circle, and when on the poor side, by a triangle. Moreover, the width of the slit 122a and the slit 132a is called a slit width.

From the results shown in Figures 7 and 8, the present inventor found that the influence of an alignment defect on the display of a display pattern can be reduced by adjusting the width of the slit 122a and the slit 132a. Considering the above results, the ON brightness decreases as the width of the slit 122a and the slit 132a becomes wider because an opening ratio of the segment 191 decreases. On the other hand, the alignment stability worsens as the stripe width becomes smaller (the increase in alignment defects is thought to be large). In addition, when the slit width becomes 8µm, the ON brightness decreases. Therefore, preferably, the slit width, that is to say, the width of the slit 122a and slit 132a is 9µm.

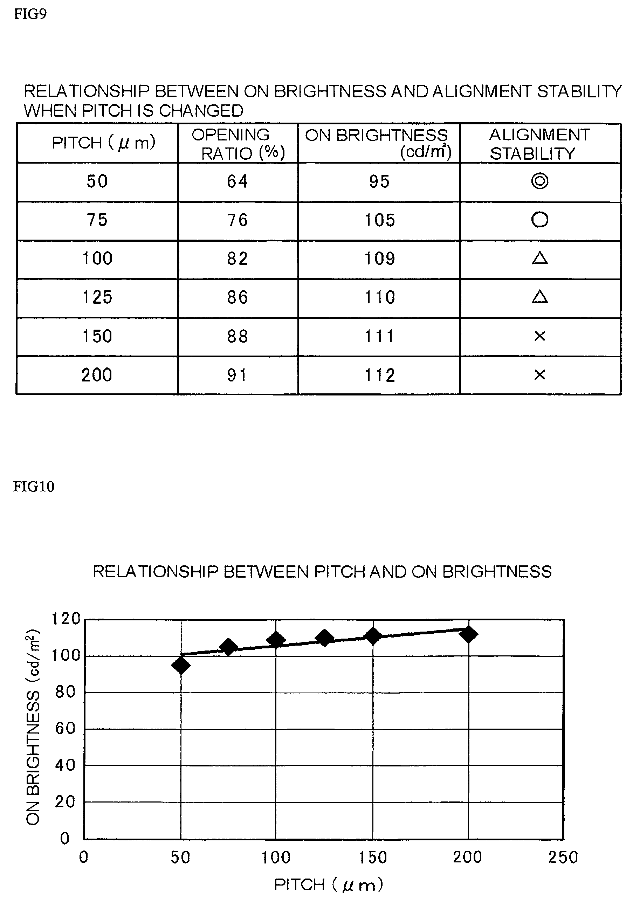

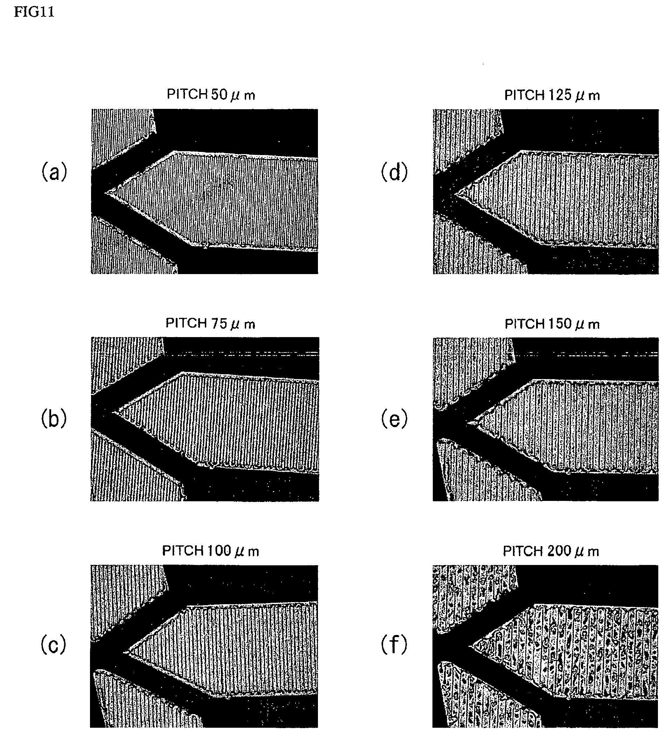

In addition, the present inventor fixes the slit width of the slit 122a and the slit 132a to 9µm, fixes the thickness of the liquid crystal layer 110 to 4µm, changes the pitch (the pitch P and the like) of the slit 122a and the slit 132a to measure the ON brightness when one segment 191 is lighted under voltage application, and confirm the unevenness of the brightness (alignment stability) by the visual inspection. This result is shown in Figure 9 to Figure 11. Note that the X in the alignment stability represents that the alignment stability is poor. Further, Figure 11 is a diagram showing a microscope photograph of some areas (e.g. , area C surrounded by the chain double-dashed line of Figure 3) of a plurality of segments 191 when voltage is applied to light the plurality of segments 191.

From the results shown in Figures 9 to 11, the present inventor found that the influence of an alignment defect on the display of the contour portion of a display pattern can be reduced by adjusting the pitch of the slit 122a and the slit 132a. Considering the above results, the ON brightness increases as the pitch of the slit 122a and the slit 132a becomes wider because an opening ratio of the segment 191 increases. On the other hand, the alignment stability suddenly worsens as the pitch becomes wider (the increase in alignment defects is thought to be large). In particular, when the pitch is equal to or greater than 150µm as shown in Figure 11 (e), the alignment stability becomes poor, and visibility of the segment 191 worsens. Therefore, preferably, the pitch of the slit 122a and the slit 132a is from 50µm to 150µm inclusive.

### Industrial applicability

The present invention is applicable to a liquid crystal display element.

### Reference Signs List

- 91: ABSORPTION AXIS
- 93: ABSORPTION AXIS
- 95: DIRECTION IN WHICH LIQUID CRYSTAL MOLECULE TIPS
- 100: LIQUID CRYSTAL DISPLAY ELEMENT
- 110: LIQUID CRYSTAL LAYER
- 111: LIQUID CRYSTAL MOLECULE
- 155: OBLIQUE ELECTRIC FIELD
- 120: UPPER SUBSTRATE
- 121: BASE MATERIAL
- 122: UPPER ELECTRODE
- 122a: SLIT
- 122b: CENTRAL AXIS
- 123: INSULATING FILM
- 124: ALIGNMENT FILM
- 130: LOWER SUBSTRATE
- 131: BASE MATERIAL
- 132: LOWER ELECTRODE
- 132a: SLIT
- 132b: CENTRAL AXIS
- 133: INSULATING FILM
- 134: ALIGNMENT FILM
- 140: UPPER POLARIZING PLATE
- 150: LOWER POLARIZING PLATE
- 160: VIEWING ANGLE COMPENSATING PLATE
- 190: ENTIRE DISPLAY AREA
- 191: SEGMENT
- 222: UPPER ELECTRODE
- 222a: SLIT
- 232a: SLIT
- 291: SEGMENT

## Claims

1. A liquid crystal display element (100) comprising a liquid crystal layer (110), a first electrode (122) and a second electrode (132), the first electrode (122) and the second electrode (132) facing each other with the liquid crystal layer (110) sandwiched therebetween in the thickness direction of the liquid crystal layer,
the first electrode is provided with a first slit (122a) penetrating in the thickness direction,
the second electrode is provided with a second slit (132a) penetrating in the thickness direction,
the first slit and the second slit are formed so as to be displaced from each other when viewed in the thickness direction, so that when voltage is applied to the first electrode (122) and the second electrode (132), an electric field that has an inclination with respect to the thickness direction is generated, and **characterized in that**
the contour of one end portion of the first slit is a substantially semicircular arc, or
the contour of one end portion of the first slit has three or more corners, and among three or more corners, there is at most one corner with an angle of 90 degrees or less.

2. The liquid crystal display element (100) according to claim 1 **characterized in that** the contour of one end portion of the second slit has at most one corner with an angle of 90 degrees or less.

3. The liquid crystal display element (100) according to any one of claims 1 to 2 **characterized in that**
the first electrode (122) is provided with a plurality of first slits
the second electrode (132) is provided with a plurality of second slits, and
the plurality of first slits and the plurality of second slits are formed so as to be alternately displaced from each other when viewed in the thickness direction.

4. The liquid crystal display element (100) according to any one of claims 1 to 3 **characterized in that**
a display area of the liquid crystal display element (100) is formed by the first electrode (122) and the second electrode (132), the first slit (122a) and the second slit (132a) are long in a first direction, and the length of the first slit (122a) in the first direction and the length of the second slit (132a) in the first direction are different from each other, and
when viewed in the thickness direction, the contour of the display area on one end portion side of the first slit (122a) and the second slit (132a) has an inclination with respect to the first direction.

5. The liquid crystal display element (100) according to any one of claims 1 to 4 **characterized in that** the width of the first slit (122a) and the width of the second slit (132a) are 9 µm.

6. The liquid crystal display element (100) according to any one of claims 1 to 4 **characterized in that** the pitch of the first slit (122a) and the pitch of the second slit (132a) are from 50 µm to 150 µm inclusive.

## Patentansprüche

1. Flüssigkristallanzeigeelement (100), das eine Flüssigkristallschicht (110), eine erste Elektrode (122) und eine zweite Elektrode (132) umfasst, wobei die erste Elektrode (122) und die zweite Elektrode (132) einander zugewandt sind, wobei die Flüssigkristallschicht (110) dazwischen in Dickenrichtung der Flüssigkristallschicht eingeschoben ist,
wobei die erste Elektrode mit einem ersten Schlitz (122a) versehen ist, der in Dickenrichtung eindringt,
wobei die zweite Elektrode mit einem zweiten Schlitz (132a) versehen ist, der in Dickenrichtung eindringt,
wobei der erste Schlitz und der zweite Schlitz so gebildet sind, dass sie in Dickenrichtung zueinander versetzt sind, so dass dann, wenn eine Spannung an die erste Elektrode (122) und die zweite Elektrode (132) angelegt wird, ein elektrisches Feld, das eine Neigung bezüglich der Dickenrichtung hat, erzeugt wird, und **dadurch gekennzeichnet, dass**
die Kontur von einem Endabschnitt des ersten Schlitzes im Wesentlichen ein halbkreisförmiger Bogen ist oder
die Kontur von einem Endabschnitt des ersten Schlitzes drei oder mehr Ecken hat und es unter den drei oder mehr Ecken eine Ecke mit einem Winkel von 90 Grad oder weniger gibt.

2. Flüssigkristallanzeigeelement (100) nach Anspruch 1, **dadurch gekennzeichnet, dass** die Kontur von einem Endabschnitt des zweiten Schlitzes höchstens eine Ecke mit einem Winkel von 90 Grad oder weniger hat.

3. Flüssigkristallanzeigeelement (100) nach einem der Ansprüche 1 bis 2, **dadurch gekennzeichnet, dass**
die erste Elektrode (122) mit mehreren ersten Schlitzen versehen ist,
die zweite Elektrode (132) mit mehreren zweiten Schlitzen versehen ist und
die mehreren ersten Schlitze und die mehreren zweiten Schlitze so gebildet sind, dass sie in Dickenrichtung abwechselnd zueinander versetzt sind.

4. Flüssigkristallanzeigeelement (100) nach einem der Ansprüche 1 bis 3, **dadurch gekennzeichnet, dass**
eine Anzeigefläche des Flüssigkristallanzeigeelements (100) durch die erste Elektrode (122) und die zweite Elektrode (132) gebildet ist, wobei der erste Schlitz (122a) und der zweite Schlitz (132a) in einer ersten Richtung langgestreckt sind und die Länge des ersten Schlitzes (122a) in der ersten Richtung und die Länge des zweiten Schlitzes (132a) in der ersten Richtung voneinander verschieden sind, und
die Kontur der Anzeigefläche auf einer Endabschnittsseite des ersten Schlitzes (122a) und des zweiten Schlitzes (132a) eine Neigung bezüglich der ersten Richtung hat, wenn sie in Dickenrichtung betrachtet wird.

5. Flüssigkristallanzeigeelement (100) nach einem der Ansprüche 1 bis 4, **dadurch gekennzeichnet, dass** die Breite des ersten Schlitzes (122a) und die Breite des zweiten Schlitzes (132a) 9 µm betragen.

6. Flüssigkristallanzeigeelement (100) nach einem der Ansprüche 1 bis 4, **dadurch gekennzeichnet, dass** die Schrittweite des ersten Schlitzes (122a) und die Schrittweite des zweiten Schlitzes (132a) im Bereich von 50 µm bis einschließlich 150 µm liegen.

## Revendications

1. Élément d'affichage à cristaux liquides (100) comprenant une couche de cristaux liquides (110), une première électrode (122) et une deuxième électrode (132), la première électrode (122) et la deuxième électrode (132) se faisant face avec la couche de cristaux liquides (110) intercalée entre elles dans la direction de l'épaisseur de la couche de cristaux liquides,
la première électrode étant pourvue d'une première fente (122a) pénétrant dans la direction de l'épaisseur,
la deuxième électrode étant pourvue d'une deuxième fente (132a) pénétrant dans la direction de l'épaisseur,
la première fente et la deuxième fente étant formées de manière à être décalées l'une de l'autre quand on regarde dans la direction de l'épaisseur, de telle sorte que lorsqu'une tension est appliquée à la première électrode (122) et la deuxième électrode (132), un champ électrique qui a une inclinaison par rapport à la direction de l'épaisseur est généré, et **caractérisé en ce que**
le contour d'une partie d'extrémité de la première fente est un arc sensiblement semi-circulaire, ou
le contour d'une partie d'extrémité de la première fente a au moins trois coins, et parmi au moins trois coins, il y a au maximum un coin avec un angle de 90 degrés ou moins.

2. Élément d'affichage à cristaux liquides (100) selon la revendication 1, **caractérisé en ce que** le contour d'une partie d'extrémité de la deuxième fente a au maximum un coin avec un angle de 90 degrés ou moins.

3. Élément d'affichage à cristaux liquides (100) selon l'une quelconque des revendications 1 et 2, **caractérisé en ce que**
la première électrode (122) est pourvue d'une pluralité de premières fentes,
la deuxième électrode (132) est pourvue d'une pluralité de deuxièmes fentes, et
la pluralité de premières fentes et la pluralité de deuxièmes fentes sont formées de manière à être alternativement décalées les unes des autres quand on regarde dans la direction de l'épaisseur.

4. Élément d'affichage à cristaux liquides (100) selon l'une quelconque des revendications 1 à 3, **caractérisé en ce que**
une zone d'affichage de l'élément d'affichage à cristaux liquides (100) est formée par la première électrode (122) et la deuxième électrode (132), la première fente (122a) et la deuxième fente (132a) sont longues dans une première direction, et la longueur de la première fente (122a) dans la première direction et la longueur de la deuxième fente (132a) dans la première direction sont différentes l'une de l'autre, et
quand on regarde dans la direction de l'épaisseur, le contour de la zone d'affichage du côté d'une partie d'extrémité de la première fente (122a) et de la deuxième fente (132a) a une inclinaison par rapport à la première direction.

5. Élément d'affichage à cristaux liquides (100) selon l'une quelconque des revendications 1 à 4, **caractérisé en ce que** la largeur de la première fente (122a) et la largeur de la deuxième fente (132a) sont de 9 µm.

6. Élément d'affichage à cristaux liquides (100) selon l'une quelconque des revendications 1 à 4, **caractérisé en ce que** le pas de la première fente (122a) et le pas de la deuxième fente (132a) sont de 50 µm à 150 µm inclus.
